# EUROPÄISCHE PATENTSCHRIFT

(11) **EP 1 604 137 B1**
(45) Veröffentlichungstag und Bekanntmachung des Hinweises auf die Patenterteilung: **19.11.2008**
(21) Anmeldenummer: 04719440.2
(22) Anmeldetag: 11.03.2004
(51) Int. Cl.: F16K 15/14

(54) **EINBAUTEIL ZUM EINSETZEN IN EINE GAS- ODER FLÜSSIGKEITSLEITUNG**
INSERTABLE COMPONENT WHICH CAN BE INSERTED INTO A GAS OR LIQUID LINE
PIECE D'INSERTION MONTEE DANS UN CONDUIT DE GAZ OU DE LIQUIDE

(30) Priorität: 15.03.2003 DE 10311501
(43) Veröffentlichungstag der Anmeldung: 14.12.2005
(73) Patentinhaber: Neoperl GmbH, 79379 Müllheim (DE)
(72) Erfinder: Hart, Keith, Welland, Worcestershire WR13 6NE (GB)
(74) Vertreter: Maucher, Wolfgang
(86) Internationale Anmeldenummer: PCT/EP2004/002507
(87) Internationale Veröffentlichungsnummer: WO 2004/083699

(56) Entgegenhaltungen:
- WO-A-20/04083698
- DE-A- 4 033 925
- DE-A- 19 837 694
- DE-B- 1 154 982
- US-A- 3 646 956
- US-A- 4 117 856
- US-A- 5 305 795

## Beschreibung

Die Erfindung betrifft einen Durchflussmengenregler, der als ein in eine Gas- oder Flüssigkeitsleitung einsetzbares Einbauteil ausgebildet ist und ein Gehäuse hat, in dessen Gehäuse-Inneren zumindest ein Drossel- oder Regelkörper angeordnet ist, der zwischen sich und einer Gehäusewand einen sich druckabhängig verändernden Regelspalt begrenzt.

Es ist bereits bekannt, mehrere sanitäre Einbauteile, die insbesondere auch unterschiedlichen Funktionen dienen, zu einer sanitären Einbaueinheit zusammenzufassen. So ist aus der DE 297 03 335 U1 der Anmelderin bereits ein Rückflussverhinderer bekannt, der neben einem zuströmseitigen Schmutzfangsieb und einem abströmseitigen Durchflussmengenregler Bestandteil einer sanitären Einbaueinheit ist. Solche sanitären Einbaueinheiten werden beispielsweise bei Thermostatmischbatterien am Kaltwasser- und Warmwasser-Eintritt eingebaut, um mit Hilfe des Rückflussverhinderers ein Eindringen des Kaltwassers in die Warmwasser-Leitung und umgekehrt zu verhindern und um mittels des Durchflussmengenreglers auch bei schwankenden Flüssigkeitsdrücken des zuströmenden Wassers eine gleichbleibende Wassermenge zu gewährleisten.

Der vorbekannte Rückflussverhinderer weist ein Gehäuse auf, in dem sich ein Ventilkegel befindet. Der Ventilkegel wirkt mit einem Ventilsitz zusammen, der in das Gehäuse innenseitig eingeformt ist. Der Ventilkegel ist durch den Druck des zuströmenden Wassers gegen die Rückstellkraft einer Druckfeder von einer Schließstellung in eine Offenstellung bewegbar. Bei einer Gegenströmung wird der Ventilkegel im Gehäuse gegen den Ventilsitz bewegt und der Rückflussverhinderer zur Vermeidung eines unerwünschten Rückflusses geschlossen.

Der in der sanitären Einbaueinheit gemäß DE 297 03 335 U1 vorgesehene und dem oben beschriebenen Rückflussverhinderer nachgeschaltete Durchflussmengenregler hat einen, sich in Durchflussrichtung konisch verjüngenden Regelkern, der mit einem in Abhängigkeit vom Wasserdruck aufweitbaren Gummiring zusammenwirkt.

Aus der US-A-4 117 856 ist bereits eine sanitäre Funktionseinheit bekannt, die als Rückflussverhinderer ausgestaltet ist. Die vorbekannte Funktionseinheit weist ein Gehäuse auf, das mit den an seinem Gehäuseeinlass und seinem Gehäuseauslass vorgesehenen Anschlussgewinden in eine sanitäre Versorgungsleitung als Leitungsabschnitt zwischengeschaltet werden kann. Im Gehäuse-Inneren ist ein Elastomerteil gehalten, dass als Schließkörper ausgestaltet ist und einen topfförmigen Zentralbereich mit drei umfangsseitig radial vorstehenden Stützbeinen hat. Dieser Schließkörper wirkt mit der zentralen Durchströmöffnung eines nachgeschalteten ringförmigen Elastomerteils zusammen, das von einer unerwünschten Rückströmung dicht gegen den Schließkörper gepresst wird. Aus Fig. 1 der US-A-4 117 856 wird deutlich, dass das ringförmige Elastomerteil von einer in Durchflussrichtung fließenden Flüssigkeitsströmung derart nach außen gegen die Gehäusewand gedrückt wird, dass sich der lichte Öffnungsquerschnitt mit zunehmendem Wasserdruck zunehmend weitet. Da die aus US-A-4 177 856 vorbekannte Funktionseinheit somit mit zunehmendem Wasserdruck eine steigende Flüssigkeitsmenge pro Zeiteinheit passieren lässt, beinhaltet dieses vorbekannte Funktionseinheit gerade nicht die Funktion eines Durchflussmengenreglers, der bei steigendem Flüssigkeitsdruck die pro Zeiteinheit durchfließende Flüssigkeitsmenge auf einen stets gleichbleibenden Maximalwert einregelt und dazu den lichten Öffnungsquerschnitt seines Steuerspalts unter dem Druck der durchströmenden Flüssigkeit gerade verengen muss.

Es besteht die Aufgabe, einen Durchflussmengenregler der eingangs erwähnten Art zu schaffen, der sich mit vergleichsweise geringem Aufwand herstellen lässt und einfach und kompakt ausgestaltet werden kann.

Die erfindungsgemäße Lösung dieser Aufgabe besteht bei dem Durchflussmengenregler der eingangs erwähnten Art in den Merkmalen des geltenden Patentanspruchs 1.

Der erfindungsgemäße Durchflussmengenregler weist ein Gehäuse auf, dass aus zumindest zwei, vorzugsweise koaxialen Gehäuseteilen zusammengesetzt ist. Zwischen diesen Gehäuseteilen ist eine Gehäuseteiledichtung gehalten, die einstückig mit dem zumindest einen, im Gehäuse-Inneren befindlichen Drosselkörper verbunden ist. Dieser wenigstens eine Drosselkörper begrenzt zwischen sich und einer Gehäusewand einen sich druckabhängig verändernden Regelspalt. Dabei ist der erfindungsgemäße Durchflussmengenregler als Einbauteil ausgestaltet, welches in eine Gas- oder Flüssigkeitsleitung einsetzbar ist. Da der erfindungsgemäße Durchflussmengenregler mit geringem Aufwand auch aus nur drei Einzelteilen zusammengesetzt werden kann und da der erfindungsgemäße Durchflussmengenregler als ein, in eine Gas- oder Flüssigkeitsleitung einsetzbares Einbauteil ausgestaltet ist, lässt sich der erfindungsgemäße Durchflussmengenregler mit vergleichsweise geringem Aufwand herstellen und einfach und kompakt ausgestalten.

Besonders vorteilhaft ist es, wenn das Einbauteil auch als Rückflussverhinderer ausgebildet ist und wenn die Gehäuseteiledichtung dazu mit zumindest einem, im Gehäuse-Inneren beweglich angeordneten Schließkörper einstückig verbunden ist, welcher Schließkörper als eine innerhalb der Gehäusekammer vom Fördermedium bewegbare Ringmembrane ausgebildet ist und welcher Schließkörper in Schließstel.lung eine Durchtrittsöffnung oder mehrere Durchtrittsöffnungen von Zuströmkanälen abdichtet. Eine solche Ausführungsform vereint die Funktionen eines Durchflussmengenreglers und eines Rückflussverhinderers in sich. Dabei dichtet die einen Schließkörper bildende Ringmembrane bei Auftreten einer Gegenströmung die Durchtrittsöffnungen der Zuströmkanäle ab, die in zumindest einem Ringbereich im Gehäuse-Inneren des Außengehäuses angeordnet sind. Bei einer in üblicher Durchflussrichtung fließenden Flüssigkeitsströmung wird die zumindest eine Ringmembrane demgegenüber von ihrer Schließstellung in die Offenstellung bewegt, in welcher die Durchtrittsöffnungen frei bleiben. Auch diese Ausführungsform, welche die Funktion eines Rückflussverhinderers und eines Durchflussmengenreglers in sich vereint, kann somit allein aus drei Teilen hergestellt werden, nämlich aus den beiden Gehäuseteilen sowie aus dem die Ringmembrane und die Gehäuseteiledichtung zusammenfassenden Einzelteil. Auch diese Ausführungsform lässt sich daher entsprechend einfach und kompakt herstellen.

Besonders vorteilhaft ist es, wenn die Gehäuseteiledichtung und die zumindest eine, den Schließkörper bildende Ringmembrane als Flachkörper ausgebildet sind. Bei dem erfindungsgemäßen Durchflussmengenregler können die Gehäuseteiledichtung und die zumindest eine, den Schließkörper bildende Ringmembrane als einstückige Flachkörper ausgebildet sein und bedürfen nicht einer komplizierten Formgebung.

Um die Gehäuseteiledichtung und die mit ihr verbundenen Ringmembranen und/oder Drosselkörper im Gehäuse-Inneren auf einfache Weise sicher fixieren zu können, ist es vorteilhaft, wenn die Gehäuseteile einander zugewandte, ringförmige Stirnflächen aufweisen, zwischen denen die Gehäuseteiledichtung eingespannt ist.

Um die Herstellung des erfindungsgemäßen Durchflussmengenreglers noch zusätzlich zu vereinfachen, ist es vorteilhaft, wenn an den zumindest zwei Gehäuseteilen in Montagestellung ineinander greifende Rastelemente zum Verbinden der Gehäuseteile vorgesehen sind. Somit kann auf ein kompliziertes Verschrauben, Verkleben oder Verschweißen bei der Montage des aus den Gehäuseteilen gebildeten Außengehäuses verzichtet werden.

Eine besonders leicht zu montierende Ausführungsform gemäß der Erfindung sieht vor, dass als Rastelemente eines der Gehäuseteile eine zentrale Öffnung und das andere Gehäuseteil vorzugsweise mehrere darin eingreifende Hakenelemente aufweist.

Der erfindungsgemäße Durchflussmengenregler läßt sich erforderlichenfalls auch wieder leicht demontieren, wenn die Hakenelemente des einen Gehäuseteiles in Montagestellung das andere Gehäuseteil durchgreifen und über dessen Außenseite überstehen.

Eine bevorzugte Ausführungsform gemäß der Erfindung sieht vor, dass die die Gehäuseteiledichtung einspannenden Stirnflächen außenrandseitig an den Gehäuseteilen vorgesehen sind. Die somit außenrandseitige Anordnung des Einspannbereichs der Gehäuseteiledichtung lässt im Gehäuseinneren einen vergleichsweisen großen Funktionsbereich für Ringmembrane und/oder Drosselkörper.

Die geringe Teilezahl des erfindungsgemäßen Durchflussmengenreglers wird noch begünstigt, wenn sich die innere Stirnfläche des zuströmseitig angeordneten Gehäuseteils über den Einspannbereich der Gehäuseteiledichtung nach innen fortsetzt und einen Abschnitt der Gehäusekammerwand bildet und wenn dort ein Zuströmkanal oder mehrere Zuströmkanäle münden. Die Durchtrittsöffnungen dieser Zuströmkanäle können in mehreren, insbesondere konzentrischen Ringbereichen des Gehäuses angeordnet sein. Besonders vorteilhaft ist es jedoch, wenn insbesondere auf einer Ringbahn des Gehäuses mehrere in Umfangsrichtung verteilt angeordnete Zuströmkanäle vorgesehen sind, die vorzugsweise unmittelbar neben dem Einspannbereich des die Gehäuseteiledichtung bildenden Bereiches der Ringmembrane münden.

Das als Rückflussverhinderer ausgebildete Einbauteil spricht bereits auf geringe Gegenströmungen besonders rasch an, wenn die Ringmembrane nach innen über einen, den Schließkörper bildenden, sich an die Gehäuseteiledichtung nach innen anschließenden Bereich verlängert ist und damit in Offen- oder Durchströmstellung eine die Gehäusekammer in zwei Teilringkammern aufteilende Trennwand bildet und in dieser Lage mit ihrem freien Innenringrand an dem abströmseitigen Gehäuseteil anliegt, wenn an den zuströmseitigen Teilringraum die Durchtritts- oder dergleichen Durchströmöffnungen angeschlossen sind und wenn in dem abströmseitigen Teilringraum wenigstens eine Rückströmöffnung mündet.

Um den Drosselkörper in seiner Regelstellung festzulegen, ist es vorteilhaft, wenn der Drosselkörper zwischen den zuströmseitigen und dem abströmseitigen Gehäuseteil in einer Gehäusekammer festgelegt ist und wenn das abströmseitige Gehäuseteil eine abströmseitige Auflage und eine äußere Abstützung und das zuströmseitige Gehäuseteil eine innenseitige, die Regelspaltbegrenzung bildende Gehäusewand oder dergleichen Anlage für den ringförmigen Drosselkörper aufweist.

Eine besonders vorteilhafte Weiterbildung gemäß der Erfindung sieht vor, dass der Durchflussmengenregler als Rückflussverhinderer ausgebildet ist.

Dabei kann es vorteilhaft sein, wenn die Ringmembrane im Anschluss an die Gehäuseteiledichtung als Schließkörper ausgebildet und an ihrem inneren Ende mit dem Drosselkörper einstückig verbunden ist. Diese weiterbildende Ausführungsform, die ebenfalls aus nur drei Einzelteilen bestehen kann, ist sowohl als Rückflussverhinderer als auch als Durchflussmengenregler ausgebildet. Dabei ist der für den Rückflussverhinderer benötigte Schließkörper und der für den Durchflussmengenregler erforderliche Drosselkörper einstückig mit der Gehäuseteiledichtung verbunden. Eine solche Ausführungsform ist besonders kompakt und zeichnet sich durch eine geringe Einbauhöhe aus.

Die geringe Teilezahl des erfindungsgemäßen Durchflussmengenreglers wird durch dessen hohe Funktionalität noch begünstigt, wenn es zum Einsetzen in eine Flüssigkeitsleitung ausgebildet ist und außenseitig eine Ringdichtung zum Abdichten gegenüber der Flüssigkeitsleitung aufweist und wenn diese Ringdichtung einstückig mit der Gehäuseteiledichtung zwischen den einander zugewandten Seiten der Gehäuseteile verbunden ist.

Dabei ist es besonders vorteilhaft, wenn die äußere Ringdichtung als O-Ringdichtung oder als Rundschnurdichtung ausgebildet ist.
Um diese Ringdichtung an der Außenseite des Gehäuses festzulegen, ist es vorteilhaft, wenn zwischen den beiden benachbarten Gehäuseteilen außenseitig eine Ringnut zur Aufnahme der äußeren Ringdichtung vorgesehen ist und wenn die Ringnut durch einen zur Trennstelle des Gehäuses hin offenen Gehäuserücksprung an dem einen Gehäuseteil zur Bildung einer Seitenwand und des Nutengrundes und durch die innere Stirnfläche des anderen Gehäuseteils zur Bildung der zweiten Seitenwand gebildet ist.

Eine weitere bevorzugte Ausführungsform von eigener schutzwürdiger Bedeutung betrifft ein als Durchflußmengenregler ausgebildetes Einbauteil, das den Durchfluß des Fluids über einen breiten Druckbereich von beispielsweise 0,1 bar bis 10 bar konstant halten kann.

Bisherige Ausführungen sanitärer Durchflußmengenregler haben ihre jeweiligen Stärken in bestimmten Druckbereichen. So sind Durchflußmengenregler bekannt, die den Soll-Durchfluß bei sehr niedrigem Druck erreichen, im mittleren bis hohen Druckbereich dagegen Probleme haben, die Kennlinie zu stabilisieren. Die Trennlinie drifftet nach oben oder unten ab oder zeigt Oszillationserscheinungen. Andere bekannte Ausführungen von Durchflußmengenreglern, die im mittleren bis hohen Druckbereich sehr gut arbeiten, verwenden einen O-Ring, der mit einem Regelprofil wechselwirkt. Bei sehr niedrigem Differenzdruck von beispielsweise etwa 0,1 bar jedoch spricht der O-Ring auf die Druckdifferenz nicht an, - der Durchfluß ergibt sich hier einzig durch den verfügbaren Querschnitt. Da der O-Ring erst bei verhältnismäßig großem Druck anspricht, darf der freie Querschnitt nicht so groß dimensioniert werden, weil der Durchfluß im Ansprechbereich sonst zu groß wird und ein unerwünschtes Überschwingen der Kennlinie erfolgt. Dadurch erreichen Durchflußmengenregler dieses Typs ihren jeweiligen Soll-Durchfluß erst bei ca. 0,7 bis 1,0 bar. Eine ähnliche Ausführung dieser Klasse von Durchflußreglern ist die Elastomerscheibe, die mit der flachen Unterseite auf einem Stützprofil aufliegt.

Die erfindungsgemäße Weiterbildung gemäß der Erfindung sieht nun vor, dass die Gehäuseteiledichtung beidseits zumindest mit jeweils einem Drosselkörper einstückig verbunden ist, welche Drosselkörper im Gehäuseinneren des Gehäuses in jeweils einem Steuerspalt gelagert sind. Dabei ist es besonders vorteilhaft, wenn die beidseits an der Gehäuseteiledichtung vorgesehenen Drosselkörper bei verschiedenen Differenzdrücken ansprechen und wenn ein erster Drosselkörper vorzugsweise im Niederdruckbereich und ein zweiter Drosselkörper demgegenüber im Hochdruckbereich anspricht.

Die Gehäuseteiledichtung bei dieser erfindungsgemäßen Ausführungsform ist somit beidseits mit jeweils einem Drosselkörper einstückig verbunden. Diese Drosselkörper reagieren unterschiedlich feinfühlig und können somit die Durchflußmenge in verschiedenen Druckbereichen derart regeln, dass sie sich insbesondere im Niederdruck- und im Hochdruckbereich ergänzen. Während der feinfühligere Drosselkörper bereits bei einem geringen Differenzdruck von beispielsweise 0,1 bar die freien Strömungsquerschnitte des Regelspalts verkleinert, verformt sich der demgegenüber bei einem hohen Differenzdruck ansprechende Drosselkörper erst bei weiter zunehmendem Druck und hält dabei den Durchfluß im hohen Druckbereich konstant. Die Kennlinie eines solchen Reglers erreicht bei sehr niedrigem Druck den Durchfluß-Sollwert und hält diesen Konstant bis in den hohen Druckbereich beispielsweise um etwa 10 bar.

Zweckmäßig kann es sein, wenn das als Rückflußverhinderer und/oder Durchflußmengenregler ausgestaltete Einbauteil zumindest einen lippenförmig ausgestalteten Drossel- oder Regelkörper aufweist. Möglich ist aber auch, dass das Einbauteil zusätzlich oder stattdesssen wenigstens einen als O-Ring ausgebildeten Drosselkörper hat.

Damit ein lippenförmiger Drosselkörper feinfühlig auf einen Differenzdruck reagieren kann, ist es zweckmäßig, wenn der zumindest eine lippenförmige Drosselkörper mit seinem freien Lippen-Endbereich vorzugsweise schräg entgegen der Durchströmrichtung orientiert ist.

Um den Widerstand des Drosselkörpers ab einem bestimmten Verformungsgrad schlagartig zu erhöhen, sieht eine Ausführungsform gemäß der Erfindung vor, dass die Regelbewegung des zumindest einen lippenförmigen Drosselkörpers durch einen Regelanschlag begrenzt ist.

Durch die Anordnung dieses Regelanschlags und durch einen entsprechenden Abstand zwischen dem Regelanschlag und dem davon zuströmseitig angeordneten Drosselkörper läßt sich konstruktiv der Differenzdruck variieren, bei dem der entsprechende Drosselkörper ansprechen soll. Zusätzlich oder stattdessen kann aber auch vorgesehen sein, dass die beidseits der Gehäuseteiledichtung vorgesehenen Drosselkörper unterschiedliche, jeweils an ihren Ansprechdruck angepaßte Formgebungen aufweisen.

So ist es beispielsweise möglich, dass die Gehäuseteiledichtung einerseits mit einem lippenförmigen Drosselkörper und andererseits mit einem als O-Ring ausgestalteten Drosselkörper verbunden ist. Während der vergleichsweise weiche lippenförmige Drosselkörper bereits bei einem geringen Differenzdruck anspricht, zeichnet sich ein als O-Ring ausgestalteter und entsprechend steifer Drosselkörper durch einen demgegenüber hohen Ansprechdruck aus. Möglich ist aber auch, dass die Gehäuseteiledichtung beidseits mit lippenförmigen oder mit O-ringförmigen Drosselkörpern verbunden ist, die durch ihre Formgebungen und Abmessungen in unterschiedlichen Druckbereichen wirksam werden.

Eine weitere Ausführungsform gemäß der Erfindung sieht daher auch vor, dass die Gehäuseteiledichtung beidseits jeweils mit einem lippenförmigen Drosselkörper verbunden ist.

Das Ansprechverhalten des erfindungsgemäßen Durchflußmengenreglers kann auch dadurch beeinflußt werden, dass der im Niederdruckbereich ansprechende Drosselkörper dem inneren oder dem äußeren Steuerspalt zugeordnet ist, weil nämlich der im äußeren Regelspalt wirkende Drosselkörper bei Verformung radial nach außen eine größere Fläche verschließt als die im inneren Regelspalt befindliche Drosselkörper-Lippe.

Eine Weiterbildung gemäß der Erfindung sieht vor, dass die Gehäuseteiledichtung sowie die damit verbundenen Drosselkörper ein Mehrkomponenten-Spritzgußteil bilden und dass die Drosselkörper aus verschiedenen Elastomeren bestehen.

Um bei dem als Durchflußmengenregler ausgebildeten Einbauteil ein leichtes Ansprechen des Drosselkörpers zu begünstigen und um diesen Durchflußmengenregler auf eine festgelegte maximale Durchflußmenge auslegen zu können, ist es vorteilhaft, wenn die den Regelspalt begrenzende Gehäusewand eine etwa in Durchströmrichtung verlaufende Rippen-, Rillen- oder dergleichen Regelprofilierung aufweist.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: ein als Rückflußverhinderer und als Durchflußmengenregler ausgebildetes und in eine Gas- oder Flüssigkeitsleitung einsetzbares Einbauteil in einem Längsschnitt,
- Fig. 2: ein lediglich als Rückflußverhinderer ausgestaltetes Einbauteil in einem Längsschnitt,
- Fig. 3: die abströmseitige Stirnseite eines Einbauteiles gemäß den Figuren 1 oder 2,
- Fig. 4: ein in einem Längsschnitt dargestelltes und als Durchflußmengenregler ausgestaltetes Einbauteil, dessen beiden Gehäuseteile eine Gehäuseteiledichtung zwischen sich einspannen, die beidseits mit jeweils einem lippenförmigen und in einem Regelspalt gelagerten Drosselkörper einstückig verbunden ist,
- Fig. 5: den Durchflußmengenregler aus Figur 4 in einer Draufsicht,
- Fig. 6: einen mit Figur 4 und 5 vergleichbaren Durchflußmengenregler, wobei jedoch die Gehäuseteiledichtung im Bereich des inneren Regelspalts mit einem als ORing ausgestalteten Drosselkörper und im Bereich des äußeren Regelspalts mit einem lippenförmigen Drosselkörper verbunden ist,
- Fig. 7: einen ebenfalls mit Figur 4 und 5 vergleichbaren Durchflußmengenregler, dessen Gehäuseteiledichtung mit zwei lippenförmigen Drosselkörpern verbunden ist, die auf verschiedene Differenzdrücke ansprechen und dazu unterschiedliche geometrische Formen haben und
- Fig. 8: einen mit Figur 6 vergleichbaren Durchflußmengenregler, wobei jedoch der O-ringförmige Drosselkörper im Bereich des äußeren Regelspalts und der lippenförmige Drosselkörper im Bereich des inneren Regelspalts angeordnet ist.

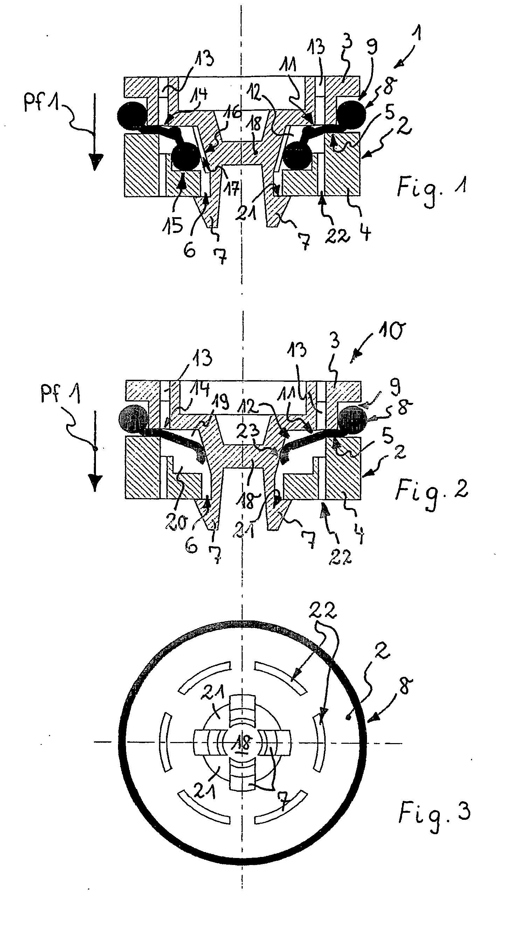

In den Figuren 1 und 2 ist ein in eine Gas- oder Flüssigkeitsleitung einsetzbares sanitäres Einbauteil in zwei unterschiedlichen Ausführungen 1, 10 dargestellt. Während das Einbauteil 10 in Figur 2 nur als Rückflußverhinderer dienen soll, ist in das Einbauteil 1 aus Figur 1 sowohl ein Rückflußverhinderer als auch ein Durchflußmengenregler integriert.

Das Außengehäuse 2 der Einbauteile 1, 10 ist aus zwei koaxialen Gehäuseteilen 3, 4 zusammengesetzt, zwischen deren einander zugewandten Seiten eine Gehäuseteiledichtung 5 gehalten ist. Die Gehäuseteile 3, 4 sind über Rastelemente miteinander verbunden, die in Montagestellung ineinandergreifen. Das abströmseitige Gehäuseteil 4 weist dazu eine zentrale Öffnung 6 auf, in die vier kreuzartig voneinander wegweisende Hakenelemente 7 des zuströmseitigen Gehäuseteiles 3 eingreifen. Diese Hakenelemente 7 stehen über die abströmseitige Stirnaußenseite des Gehäuses 2 über.

Die Einbauteile 1, 10 sind in eine Flüssigkeitsleitung einsetzbar. Zum Abdichten gegenüber dem Innenumfang der Flüssigkeitsleitung ist eine Ringdichtung 8 vorgesehen, die einstückig mit der Gehäuseteiledichtung 5 verbunden ist. Diese als Rundschnurdichtung ausgebildete Ringdichtung 8 ist in einer Ringnut 9 gehalten, die außenseitig zwischen den beiden Gehäuseteilen 3, 4 zur Aufnahme der Ringdichtung 8 vorgesehen ist.

Die Ringnut 9 ist durch einen zur Trennstelle des Außengehäuses 2 hin offenen Gehäuserücksprung an dem zuströmseitigen Gehäuseteil 3 begrenzt, welcher Gehäuserücksprung eine Seitenwand und den Nutengrund bildet. Demgegenüber bildet die innere Stirnfläche des anderen Gehäuseteiles 4 die andere Seitenwand der Ringnut 9.

Die beiden Gehäuseteile 3, 4 weisen außenrandseitig einander zugewandte, ringförmige Stirnflächen auf, zwischen denen die Gehäuseteiledichtung 5 eingespannt ist. Diese Gehäuseteiledichtung 5 ist auf ihrer der Ringdichtung 8 abgewandten Seite einstückig mit einer Ringmembrane 11 verbunden, die in einer Gehäusekammer 12 vom Fördermedium bewegbar und als Schließkörper des Rückflußverhinderers ausgebildet ist.

Von der zuströmseitigen Stirnfläche des Außengehäuses 2 aus führen mehrere Zuströmkanäle 13 durch das Gehäuseteil 3, die in Umfangsrichtung mit Abstand voneinander mit ihren Durchtrittsöffnungen 14 in der Gehäusekammer 12 münden. Während die Ringmembrane 11 durch eine in üblicher Durchflußrichtung Pf1 fließende Flüssigkeitsströmung in ihre Offenstellung bewegt wird, wird sie bei einer entgegen der Pfeilrichtung Pf1 gerichteten Rückströmung in ihrer Schließstellung gehalten, in der die Ringmembrane 11 die in Durchflußrichtung Pf1 abströmseitigen Mündungen der Durchtrittsöffnungen 14 abdichtet.

Die Ringmembrane 11 des in Figur 1 dargestellten Einbauteiles 1 ist an ihrem inneren, den Dichtungen 5, 8 abgewandten Ende mit einem Drossel- oder Regelkörper 15 des Durchflußmengenreglers einstückig verbunden. Der ebenfalls in der Gehäusekammer 12 im Gehäuseinneren des Außengehäuses 2 befindliche Drosselkörper 15 begrenzt zwischen sich und der Gehäusewand 16 einen sich druckabhängig verändernden Steuerspalt 17. Der zwischen den zuström-und dem abströmseitigen Gehäuseteil 3, 4 in der Gehäusekammer 12 festgelegte Drosselkörper 15 ist O-ringförmig ausgebildet.

Während das abströmseitige Gehäuseteil 4 eine abströmseitige Auflage und eine äußere Abstützung für den Drosselkörper 15 bildet, weist das zuströmseitige Gehäuseteil 3 einen zentralen, sich in Durchflußrichtung Pf1 konisch verjüngenden Gehäuse-oder Regelkern auf, der die als Steuerspaltbegrenzung dienende Gehäusewand 16 für den ringförmigen Drosselkörper 15 bildet und an dessen stirnseitigem freien Ende die Hakenelemente 7 vorstehen.

Bei dem Einbauteil 10 gemäß Figur 2 ist die mit der Ringdichtung 8 verbundene Gehäuseteiledichtung 5 sowie die sich nach innen anschließende, als Schließkörper des Rückflußverhinderers dienende Ringmembrane 11 als Flachkörper ausgebildet. Dabei ist die Ringmembrane 11 nach innen über einen als Schließkörper ausgestalteten, sich an die Gehäuseteiledichtung 5 anschließenden Bereich verlängert und bildet in Offenstellung eine die Gehäusekammer 12 in zwei Teilringkammern 19, 20 aufteilende Trennwand, wobei in den zuströmseitigen Teilringraum 19 nicht nur die Durchtrittsöffnungen 14 der Zuströmkanäle 13, sondern auch Abströmöffnungen 21 münden, die in der zentralen Öffnung 6 zwischen den Hakenelementen 7 verbleiben. Demgegenüber münden in dem abströmseitigen Teilringraum 20 mehrere Rückströmöffnungen 22, die einen auf die abströmseitige Stirnfläche des Außengehäuses 2 einwirkende Gegenströmung in den Teilringraum 20 leiten, wo diese Gegenströmung die Ringmembrane 11 in Schließstellung gegen die Durchtrittsöffnungen 14 und/oder den gerundeten oder gebogenen Innenringrand 23 gegen den zentralen Gehäusekern 18 preßt.

Der Ansprechdruck und das Ansprechverhalten des Schließ-und/oder des Drosselkörpers ist in Abhängigkeit von den gummielastischen Eigenschaften des verwendeten Materials, zum Beispiel der Shore-Härte, festlegbar. Darüber hinaus ist der Ansprechdruck und die Ansprechgeschwindigkeit insbesondere der Rückflußverhinderer-Funktion durch die in ihrer Größe gewählte radiale Vorspannung der Ringmembrane 11 veränderbar.

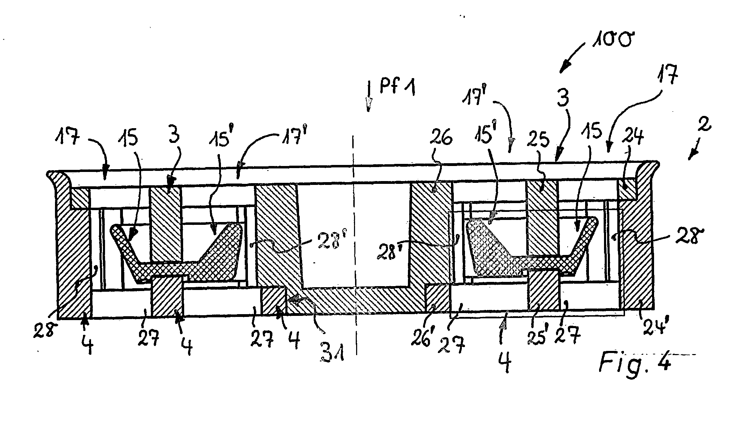

In den Figuren 4 bis 8 sind verschiedene Ausführungen 100, 101, 102 und 103 eines als Durchflußmengenregler ausgebildeten Einbauteiles dargestellt. Auch das Gehäuse 2 der in eine Gas- oder Flüssigkeitsleitung einsetzbaren Einbauteile 100, 101, 102 und 103 weist zwei Gehäuseteile 3, 4 auf, die eine Gehäuseteiledichtung 5 zwischen sich einspannen. Diese Gehäuseteiledichtung 5 ist beidseits mit jeweils einem Drosselkörper 15, 15' einstückig verbunden. Jeder dieser Drosselkörper 15, 15' ist im Gehäuseinneren des Gehäuses 2 in jeweils einem Regelspalt 17, 17' gelagert.

Wie aus den Längsschnitten in den Figuren 4, 6, 7 und 8 deutlich wird, weisen die Gehäuseteile 3, 4 jeweils zumindest zwei konzentrische Gehäuse-Ringwände 24, 25 und 26 beziehungsweise 24', 25' und 26' auf, die über radiale speichenförmige Verbindungsstege 27 miteinander verbunden sind. Die Ringwände 24/24', 25/25' und 26/26' sind paarweise einander zugeordnet, wobei die beiden mittleren Stirnwände 25/25' dieser Gehäuseteile 3, 4 die Gehäuseteiledichtung 5 zwischen ihren einander zugewandten ringförmigen Stirnflächen einspannen und die parallelen Regelspalten 17, 17' voneinander trennen.
An den den mittleren Ringwänden 25/25' zugewandten Seiten der benachbarten Ringwände 24/24' beziehungsweise 26/26' ist jeweils eine in Durchströmrichtung orientierte Regelprofilierung 28, 28' vorgesehen, die hier durch in Umfangsrichtung verteilte Rillen oder Rippen gebildet wird. Dabei können den Drosselkörpern 15, 15' an den Gehäuseteilen 3, 4 unterschiedlich gestaltete Regelprofilierungen 28, 28' zur Verfügung gestellt werden.

Die beidseits an der Gehäuseteiledichtung 5 vorgesehenen Drosselkörper 15, 15' sprechen bei verschiedenen Differenzdrücken an. Während ein erster Drosselkörper 15 vorzugsweise im Niederdruckbereich wirksam ist, spricht ein zweiter Drosselkörper 15' demgegenüber im Hochdruckbereich an. Um ein unterschiedliches Ansprechverhalten der Drosselkörper 15, 15' zu gewährleisten, weisen die Drosselkörper 15, 15' beispielsweise der hier dargestellten Einbauteile 100, 101, 102 und 103 unterschiedliche, an ihren Anpreßdruck angepaßte Formgebungen auf.

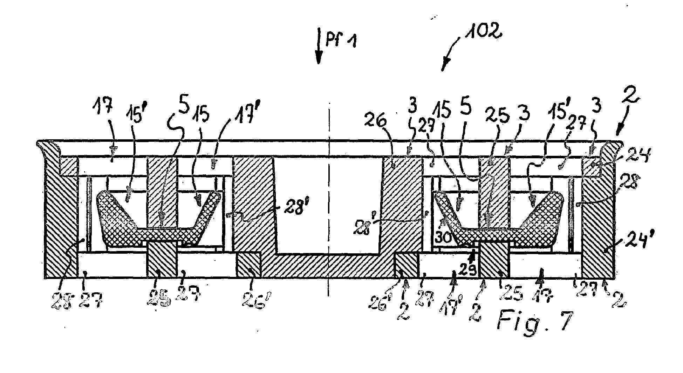

So ist an der Gehäuseteiledichtung 5 der in den Figuren 4 und 7 dargestellten Einbauteile 100, 102 jeweils eine geometrisch weiche und eine demgegenüber steife Lippe als Drosselkörper 15, 15' vorgesehen, die auf Differenzdruck unterschiedlich feinfühlig reagieren. Diese unterschiedlich steifen Drosselkörper 15, 15' regeln die Durchflußmengen in verschiedenen Druckbereichen und ergänzen sich dadurch im Niederdruck- und Hochdruckbereich.

Bei sehr kleinem Differenzdruck von beispielsweise etwa 0,1 bar legt sich die geometrisch weiche und als Drosselkörper 15 dienende Lippenausformung an die Regelprofilierung an und beginnt, die freien Strömungsquerschnitte zu verkleinern. Die geometrisch steife Lippe 15' verformt sich nicht, wodurch die freien Querschnitte dieses Bereichs für die Strömung des Fluids voll zur Verfügung stehen. Durch die große geometrische Elastizität der Lippenausformung 15 verformt sich diese bei steigendem Druck sehr schnell, d.h. im Bereich bis 0,4 bar, in die Regelprofilierung hinein und verschließt letztlich die hier verfügbaren freien Querschnitte. Bei weiter zunehmendem Druck verformt sich nun auch die steife und als Drosselkörper 15' dienende Lippenausformung und hält dadurch den Durchfluß im hohen Druckbereich konstant.

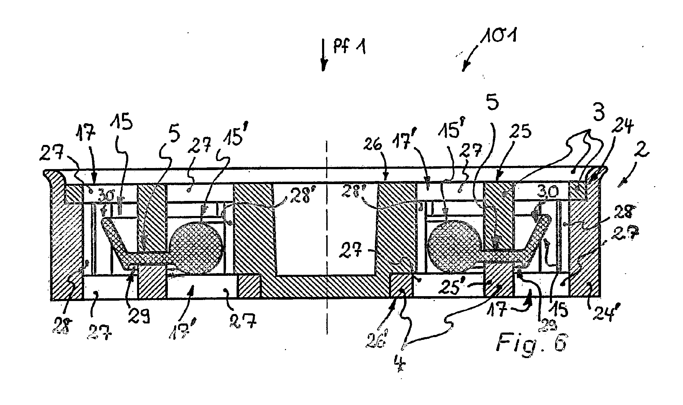

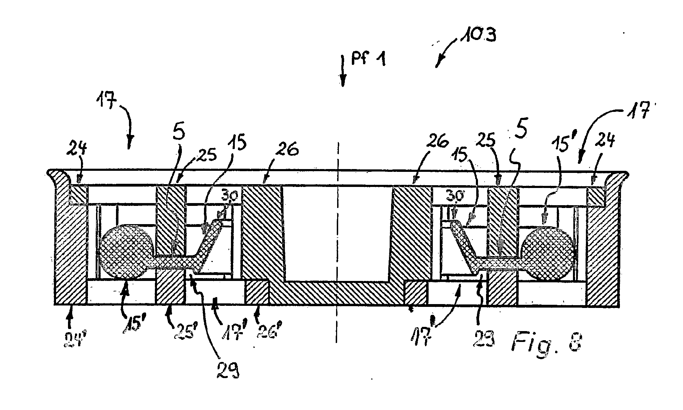

Bei den in den Figuren 6 und 8 dargestellten Einbauteilen 101 und 103 spricht der lippenförmige Drosselkörper 15 bei vergleichsweise niedrigen Differenzdrücken an, während der steifere O-ringförmige Drosselkörper 15' bei höheren Differenzdrücken wirksam wird.

Die Kennlinie der hier dargestellten Druchflußmengenregler erreicht dadurch bei sehr niedrigem Druck den Durchfluß-Sollwert und hält diesen konstant bis in den hohen Druckbereich um beispielsweise 10 bar.

Um das Ansprechverhalten der einzelnen Drosselkörper 15, 15' zu steuern, kann die Regelbewegung dieser Drosselkörper durch einen Regelanschlag begrenzt werden. Während die Verbindungsstege 27 den O-ringförmigen Drosselkörpern 15' der Einbauteile 101 und 103 als abströmseitiges Drosselkörper-Auflager dienen wirken die Verbindungsstege 27 bei den lippenförmigen Drosselkörpern 15, 15' als Regelanschläge. Die lippenförmigen Drosselkörper 15, 15' weisen dazu einen etwa quer zur Durchströmrichtung orientierten Lippenabschnitt 29 auf, der mit seiner abströmseitigen Stirnfläche mit dem benachbarten Regelanschlag zusammenwirkt und der in einen schräg entgegen der Durchströmrichtung orientierten freien Lippen-Endbereich 30 übergeht.

Die in den Figuren 4 bis 8 dargestellten zweistufigen Durchflußmengenregler 100, 101, 102 und 103 können in zwei Typen zu je zwei Varianten eingeordnet werden: Während bei einem ersten Typ gemäß den Figuren 4 und 7 die Drosselkörper 15, 15' als unterschiedlich ansprechende Lippenausformungen ausgestaltet sind, ist bei einem zweiten Typ gemäß den Figuren 6 und 8 ein Drosselkörper 15 lippenförmig und ein anderer Drosselkörper 15' O-ringförmig ausgebildet.

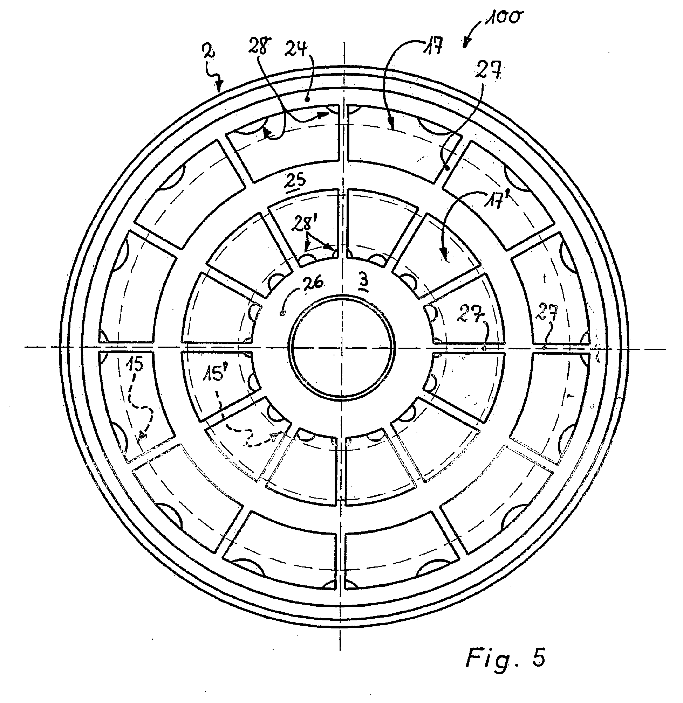

Die beiden Varianten dieser zweistufigen Durchflußmengenregler-Typen unterscheiden sich dadurch, welche Drosselkörper 15, 15' nach innen und welche nach außen wirksam sind:
Bei dem in den Figuren 4 und 5 dargestellten Durchflußmengenregler 100 sind die geometrisch steife und die geometrisch weiche Lippenausformung 15, 15' durch die umlaufende Gehäusedichtung 5 miteinander verbunden. Die Gehäuseteiledichtung 5 wird von den Gehäuse-Ringwänden 25/25' des oberen Gehäuseteils 3 und des unteren Gehäuseteils 4 in ihrer Position fixiert. Die Gehäuse-Ringwände 25, 25' und die Gehäuseteiledichtung 5 sind so aufeinander abgestimmt, dass die den Drosselkörpern 15, 15' zugeordneten Regelspalte 17, 17' wasserdicht voneinander getrennt sind. Dazu kann einer der Ringwände 25, 25' eine umlaufend erhabene Dichtleiste aufweisen, die sich in die Gehäuseteiledichtung 5 eindrückt. Durch die Ausgestaltung der Gehäuseteile 3, 4 im Bereich der abströmseitigen Verbindungsstege 27 wird bestimmt, ob und gegebenenfalls welcher Abstand zwischen den Drosselkörpern 15, 15' und den abströmseitigen sowie als Regelanschlag dienenden Verbindungsstegen 27 verbleibt.

Die als Regelanschlag dienenden Verbindungsstege 27 und deren Abstand zu den Drosselkörpern 15, 15' haben Einfluß auf das Regelverhalten der hier dargestellten Einbauteile; in der Strömung des Fluids verformen sich die lippenförmigen Drosselkörper 15, 15' anfangs relativ leicht, bis die Lippenunterseite auf den Verbindungsstegen 27 des Gehäuses 2 aufliegt. Ist dieser Zustand erreicht, so verformen sich die lippenförmigen Drosselkörper 15, 15' bei weiter zunehmendem Differenzdruck weniger stark, so dass die freien Querschnitte bei hohen Drücken nicht so schnell verschlossen werden. An der durch die Ringwände 26/26' gebildeten Gehäusewand ist die innere Regelprofilierung 28' vorgesehen. Demgegenüber weist die durch die Ringwände 24/24' gebildete Gehäusewand auf ihrer Innenseite die äußere Regelprofilierung 28 auf, die in Figur 4 das für die geometrisch weiche Lippenausformung 15 zuständige Regelprofil bildet.

Die innere Ringwand 26, 26' greift als zentrale Gehäuseausformung des ersten Gehäuseteiles 3 in eine Zentrierausnehmung 31 des zweiten abströmseitigen Gehäuseteiles 4 ein.

Gegenüber dem in den Figuren 4 und 5 dargestellten Durchflußmengenregler 100 unterscheidet sich das Einbauteil 102 in Figur 7 lediglich in der Anordnung seiner geometrisch steifen und seiner weichen Lippenausformung. Bei dem in Figur 7 dargestellten Einbauteil 101 befindet sich der geometrisch steife lippenförmige Drosselkörper 15' außen, während der geometrisch weiche lippenförmige Drosselkörper 15 innen angeordnet ist. Der im äußeren Regelspalt 17 gelagerte lippenförmige Drosselkörper 15' verschließt bei Verformung radial nach außen eine größere Fläche als der am Innenradius wirkende lippenförmige Drosselkörper 15. Dadurch hat die Anordnung der lippenförmigen Drosselkörper 15, 15' innen oder außen einen Einfluß auf das Ansprechverhalten dieser Einbauteile.

Während in Figur 6 der lippenförmige weichere Drosselkörper 15 im äußeren Regelspalt 17 wirksam ist und der O-ringförmige steifere Drosselkörper 15' sich im inneren Regelspalt 17' befindet, ist der O-ringförmige Drosselkörper 15' bei dem in Figur 8 dargestellten Einbauteil 103 im äußeren Regelspalt 17 und der lippenförmige weichere Drosselkörper 15 demgegenüber im inneren Regelspalt 17' angeordnet.

Die Auslegung der hier dargestellten Durchflußmengenregler 100, 101, 102 und 103 und das Ansprechverhalten dieser Einbauteile kann konstruktiv durch die geometrische Steifigkeit der weichen sowie der steifen Lippenausformung 15, 15', durch die elastischen Eigenschaften des verwendeten Materials, durch den Abstand zwischen den Drosselkörpern 15, 15' einerseits und den abströmseitig davon vorgesehenen Regelanschlägen andererseits, durch die Bemessung des zwischen Drosselkörper und benachbarter Gehäusewand verbleibenden Regelspalts 17, 17', durch die an der benachbarten Gehäusewand vorgesehene Regelprofilierung 28, 28' sowie durch die Anordnung der feinfühliger ansprechenden Drosselkörper im Bereich des inneren oder des äußeren Regelspalts 17, 17' variiert und beeinflußt werden.

Die Einbauteile 1, 10, 100, 101, 102 und 103, die - wie aus den Figuren 1 bis 8 deutlich wird, auch aus nur drei Teilen zusammengesetzt werden können - zeichnen sich durch ihre einfache Herstellbarkeit, ihre kompakte Bauform sowie durch ihre geringe Einbauhöhe aus.

## Patentansprüche

1. Durchflussmengenregler, der als ein in eine Gas- oder Flüssigkeitsleitung einsetzbares Einbauteil ausgebildet ist und ein Gehäuse (2) hat, in dessen Gehäuse-Inneren zumindest ein Drossel- oder Regel-Körper (15, 15') angeordnet ist, der zwischen sich und einer Gehäusewand (16) einen sich druckabhängig verändernden Regelspalt (17, 17') begrenzt, wobei das Gehäuse aus zumindest zwei Gehäuseteilen (3, 4) zusammengesetzt ist, und wobei zwischen den einander zugewandten Seiten zweier benach-barter Gehäuseteile eine Gehäuseteiledichtung (5) vorgesehen ist, die einstückig mit dem zumindest einen, im Gehäuse-Inneren gelagerten Drossel- oder Regel-Körper (15, 15') verbunden ist.

2. Durchflussmengenregler nach Anspruch 1, **dadurch gekennzeichnet, dass** das Einbauteil auch als Rückflussverhinderer ausgebildet ist, und dass die Gehäuseteiledichtung (5) dazu mit zumindest einem, im Gehäuse-Inneren beweglich angeordneten Schließkörper einstückig verbunden ist, welcher Schließkörper als eine innerhalb der Gehäusekam-mer vom Fördermedium bewegbare Ringmembrane (11) ausgebildet ist und welcher Schließkörper in Schließstellung eine Durchtrittsöffnung oder mehrere Durchtrittsöffnungen von Zuströmkanälen abdichtet.

3. Durchflussmengenregler nach Anspruch 1 oder 2, **dadurch gekennzeichnet, dass** die Gehäuseteiledichtung (5) und die zumindest eine, den Schließkörper bildende Ringmembrane (11) als Flachkörper ausgebildet sind.

4. Durchflussmengenregler nach einem der Ansprüche 1 bis 3, **dadurch gekennzeichnet, dass** die Gehäuseteile (3, 4) einander zugewandte, ringförmige Stirnflächen aufweisen, zwischen denen die Gehäuseteiledichtung (5) eingespannt ist.

5. Durchflussmengenregler nach einem der Ansprüche 1 bis 4, **dadurch gekennzeichnet, dass** eine vorzugsweise zentrale Gehäuseausformung eines ersten Gehäuseteiles (3) in eine Zentrierausnehmung (31) eines zweiten Gehäuseteiles (4) eingreift.

6. Durchflussmengenregler nach einem der Ansprüche 1 bis 5, **dadurch gekennzeichnet, dass** an den zumindest zwei Gehäuseteilen (3, 4) in Montagestellung ineinandergreifende Rastelemente zum Verbinden der Gehäuseteile (3, 4) vorgesehen sind.

7. Durchflussmengenregler nach Anspruch 6, **dadurch gekennzeichnet, dass** als Rastelemente eines der Gehäuseteile (4) eine zentrale Öffnung (6) und das andere Gehäuseteil (3) vorzugsweise mehrere darin eingreifende Hakenelemente (7) aufweist.

8. Durchflussmengenregler nach Anspruch 7, **dadurch gekennzeichnet, dass** die Hakenelemente (7) des einen Gehäuseteiles (3) in Montagestellung das andere Gehäuseteil (4) durchgreifen und über dessen Außenseite überstehen.

9. Durchflussmengenregler nach einem der Ansprüche 4 bis 8, **dadurch gekennzeichnet, dass** die die Gehäuseteiledichtung (5) einspannenden Stirnflächen außenrandseitig an den Gehäuseteilen (3, 4) vorgesehen sind.

10. Durchflussmengenregler nach einem der Ansprüche 4 bis 9, **dadurch gekennzeichnet, dass** sich die innere Stirnfläche des zuströmseitig angeordneten Gehäuseteils (3) über den Einspannbereich der Gehäuseteiledichtung (5) nach innen fortsetzt und einen Abschnitt der Gehäusekammerwand bildet und dass dort ein Zuströmkanal oder mehrere Zuströmkanäle münden.

11. Durchflussmengenregler nach Anspruch 10, **dadurch gekennzeichnet, dass** mehrere in Umfangsrichtung verteilt angeordnete Zuströmkanäle (13) vorgesehen sind, die vorzugsweise unmittelbar neben dem Einspannbereich des die Gehäuseteiledichtung (5) bildenden Bereiches der Ringmembrane (11) münden.

12. Durchflussmengenregler nach einem der Ansprüche 1 bis 11, **dadurch gekennzeichnet, dass** die Ringmembrane nach innen über einen, den Schließkörper bildenden, sich an die Gehäuseteiledichtung (5) nach innen anschließenden Bereich verlängert ist und damit in Offenstellung eine die Gehäusekammer (12) in zwei Teilringkammern (19, 20) aufteilende Trennwand bildet und in dieser Lage mit ihrem freien Innenringrand (23) an dem abströmseitigen Gehäuseteil (4) anliegt, dass an den zuströmseitigen Teilringraum (19) Abströmöffnungen (21) sowie die Durchtrittsöffnungen (14) angeschlossen sind und dass in dem abströmseitigen Teilringraum (20) wenigstens eine Rückströmöffnung (22) mündet.

13. Durchflussmengenregler nach einem der Ansprüche 1 bis 12, **dadurch gekennzeichnet, dass** der Drosselkörper (15) zwischen dem zuströmseitigen und dem abströmseitigen Gehäuseteil (3, 4) in einer Gehäusekammer (12) festgelegt ist und dass das abströmseitige Gehäuseteil (4) eine abströmseitige Auflage und eine äußere Abstützung und das zuströmseitige Gehäuseteil (3) eine innenseitige, die Regelspaltbegrenzung bildende Gehäusewand (16) oder dergleichen Anlage für den ringförmigen Drosselkörper (15) aufweist.

14. Durchflussmengenregler nach einem der Ansprüche 1 bis 13, **dadurch gekennzeichnet, dass** der Durchflussmengenregler auch als Rückflussverhinderer ausgebildet ist.

15. Durchflussmengenregler nach Anspruch 14, **dadurch gekennzeichnet, dass** die Ringmembrane (11) im Anschluss an die Gehäuseteiledichtung (5) als Schließkörper ausgebildet und an ihrem inneren Ende mit dem Drosselkörper (15) einstückig verbunden ist.

16. Durchflussmengenregler nach einem der Ansprüche 1 bis 15, **dadurch gekennzeichnet, dass** der Durchflussmengenregler zum Einsetzen in eine Flüssigkeitsleitung ausgebildet ist und außenseitig eine Ringdichtung (8) zum Abdichten gegenüber der Flüssigkeitsleitung aufweist und dass diese Ringdichtung (8) einstückig mit der Gehäuseteiledichtung (5) zwischen den einander zugewandten Seiten der Gehäuseteile (3, 4) verbunden ist.

17. Durchflussmengenregler nach Anspruch 16, **dadurch gekennzeichnet, dass** die äußere Ringdichtung (8) als O-Ringdichtung oder Rundschnurdichtung ausgebildet ist.

18. Durchflussmengenregler nach einem der Ansprüche 1 bis 17, **dadurch gekennzeichnet, dass** zwischen den beiden benachbarten Gehäuseteilen (3, 4) außenseitig eine Ringnut (9) zur Aufnahme der äußeren Ringdichtung (8) vorgesehen ist und dass die Ringnut (9) durch einen zur Trennstelle des Gehäuses (2) hin offenen Gehäuserücksprung an dem einen Gehäuseteil (3) zur Bildung einer Seitenwand und des Nutengrundes und durch die innere Stirnfläche des anderen Gehäuseteils (4) zur Bildung der zweiten Seitenwand gebildet ist.

19. Durchflussmengenregler nach einem der Ansprüche 1 bis 18, **dadurch gekennzeichnet, dass** die Gehäuseteiledichtung (5) beidseits zumindest mit jeweils einem Drosselkörper (15, 15') einstückig verbunden ist, welche Drosselkörper (15, 15') im Gehäuseinneren des Gehäuses (2) in jeweils einem Regelspalt (17, 17') gelagert sind.

20. Durchflussmengenregler nach Anspruch 19, **dadurch gekennzeichnet, dass** die die Gehäuseteiledichtung (5) stirnseitig zwischen sich einspannenden Gehäuse-Ringwände (25, 25') die den Drosselkörpern (15, 15') zugeordneten Regelspalte (17, 17') voneinander trennen.

21. Durchflussmengenregler nach Anspruch 19 oder 20, **dadurch gekennzeichnet, dass** die beidseits an der Gehäuseteiledichtung (5) vorgesehenen Drosselkörper (15, 15') bei verschiedenen Differenzdrücken ansprechen und dass ein erster Drosselkörper (15) vorzugsweise im Niederdruckbereich und ein zweiter Drosselkörper (15') demgegenüber im Hochdruckbereich anspricht.

22. Durchflussmengenregler nach einem der Ansprüche 3 bis 21, **dadurch gekennzeichnet, dass** der Durchflussmengenregler zumindest einen lippenförmig ausgestalteten Drosselkörper (15, 15') aufweist.

23. Durchflussmengenregler nach einem der Ansprüche 1 bis 22, **dadurch gekennzeichnet, dass** der Durchflussmengenregler wenigstens einen als O-Ring ausgebildeten Drosselkörper (15') aufweist.

24. Durchflussmengenregler nach einem der Ansprüche 1 bis 23, **dadurch gekennzeichnet, dass** der zumindest eine lippenförmige Drosselkörper (15, 15') mit seinem freien Lippen-Endbereich (30) vorzugsweise schräg entgegen der Durchströmrichtung (Pf1) orientiert ist.

25. Durchflussmengenregler nach einem der Ansprüche 22 bis 24, **dadurch gekennzeichnet, dass** die Regelbewegung des zumindest einen lippenförmigen Drosselkörpers (15, 15') durch einen Regelanschlag begrenzt ist.

26. Durchflussmengenregler nach einem der Ansprüche 22 bis 25, **dadurch gekennzeichnet, dass** der zumindest eine lippenförmige Drosselkörper (15, 15') einen etwa quer zur Durchströmrichtung (Pf1) orientierten Lippenabschnitt (29) hat, der in den entgegen der Durchströmrichtung (Pf1) orientierten freien Lippen-Endbereich (30) übergeht.

27. Durchflussmengenregler nach Anspruch 26, **dadurch gekennzeichnet, dass** der etwa quer zur Durchströmrichtung (Pf1) orientierte Lippenabschnitt (29) mit dem Regelanschlag zusammenwirkt.

28. Durchflussmengenregler nach einem der Ansprüche 1 bis 27, **dadurch gekennzeichnet, dass** zumindest eines der Gehäuseteile (3, 4) wenigstens zwei, vorzugsweise etwa konzentrische Ringwände (24, 25, 26; 24', 25', 26') hat, die über etwa radiale Verbindungsstege (27) miteinander verbunden sind.

29. Durchflussmengenregler nach Anspruch 28, **dadurch gekennzeichnet, dass** zumindest ein, einem Drosselkörper (15, 15') abströmseitig nachgeordneter Verbindungssteg (27) als Regelanschlag und/oder als Drosselkörper-Auflager ausgestaltet ist.

30. Durchflussmengenregler nach einem der Ansprüche 19 bis 29, **dadurch gekennzeichnet, dass** die beidseits der Gehäuseteiledichtung (5) vorgesehenen Drosselkörper (15, 15') unterschiedliche, jeweils an ihren Ansprechdruck angepasste Formgebungen aufweisen.

31. Durchflussmengenregler nach Anspruch 30, **dadurch gekennzeichnet, dass** die Gehäuseteiledichtung (5) einerseits mit einem lippenförmigen Drosselkörper (15) und andererseits mit einem als O-Ring ausgestalteten Drosselkörper (15') verbunden ist.

32. Durchflussmengenregler nach einem der Ansprüche 19 bis 30, **dadurch gekennzeichnet, dass** die Gehäuseteiledichtung (5) beidseits jeweils mit einem lippenförmigen Drosselkörper (15, 15') verbunden ist.

33. Durchflussmengenregler nach einem der Ansprüche 21 bis 32, **dadurch gekennzeichnet, dass** der im Niederdruckbereich ansprechende Drosselkörper (15) dem inneren oder dem äußeren Steuerspalt (17, 17') zugeordnet ist.

34. Durchflussmengenregler nach einem der Ansprüche 19 bis 33, **dadurch gekennzeichnet, dass** die Gehäuseteiledichtung (5) sowie die damit verbundenen Drosselkörper (15, 15') ein Mehrkomponenten-Spritzgussteil bilden und dass die Drosselkörper (15, 15') aus verschiedenen Elastomeren bestehen.

35. Durchflussmengenregler nach einem der Ansprüche 1 bis 34, **dadurch gekennzeichnet, dass** zumindest eine, einen Regelspalt (17, 17') begrenzende Gehäusewand (16) eine etwa in Durchströmrichtung (Pf1) verlaufende Rippen-, Rillen- oder dergleichen Regelprofilierung (24; 28, 28') aufweist.

## Claims

1. Throughflow regulator which is constructed as an insert adapted to be installed in a gas- or liquid-carrying pipe and has a housing (2) inside which is arranged at least one throttle or regulating member (15, 15'), which defines, between itself and a housing wall (16), a regulating gap (17, 17') that varies depending on pressure, the housing being composed of at least two housing parts (3, 4), and between the facing sides of two adjacent housing parts is provided a housing part seal (5) which is integrally connected to the at least one throttle or regulating member (15, 15') mounted inside the housing.

2. Throughflow regulator according to claim 1, **characterised in that** the insert is also constructed as a backflow preventer, and **in that** for this purpose the housing part seal (5) is integrally connected to at least one closure member mounted to be movable inside the housing, said closure member being constructed as an annular membrane (11) that is movable inside the housing chamber by the delivery medium, and said closure member in the closed position seals off a through-opening or a plurality of through-openings from inflow channels.

3. Throughflow regulator according to claim 1 or 2, **characterised in that** the housing part seal (5) and the at least one annular membrane (11) forming the closure member are constructed as flat components.

4. Throughflow regulator according to one of claims 1 to 3, **characterised in that** the housing parts (3, 4) have annular end faces facing one another, between which the housing part seal (5) is clamped.

5. Throughflow regulator according to one of claims 1 to 4, **characterised in that** a preferably central housing moulding of a first housing part (3) engages in a centring recess (31) of a second housing part (4).

6. Throughflow regulator according to one of claims 1 to 5, **characterised in that** latching elements engaging in one another in the assembly position are provided on the at least two housing parts (3, 4) for joining the housing parts (3, 4) together.

7. Throughflow regulator according to claim 6, **characterised in that** as latching elements one of the housing parts (4) comprises a central opening (6) and the other housing part (3) preferably comprises a plurality of hook elements (7) engaging therein.

8. Throughflow regulator according to claim 7, **characterised in that** the hook elements (7) of one housing part (3) pass through the other housing part (4) in the assembly position and project beyond the outside thereof.

9. Throughflow regulator according to one of claims 4 to 8, **characterised in that** the end faces clamping the housing part seal (5) are provided on the outer edges of the housing parts (3, 4).

10. Throughflow regulator according to one of claims 4 to 9, **characterised in that** the inner end face of the housing part (3) arranged on the inflow side continues inwards over the clamping region of the housing part seal (5) and forms part of the housing chamber wall and **in that** an inflow channel or a plurality of inflow channels empty into it.

11. Throughflow regulator according to claim 10, **characterised in that** a plurality of inflow channels (13) are provided, distributed in the circumferential direction, preferably terminating immediately adjacent to the clamping region of the part of the annular membrane (11) that forms the housing part seal (5).

12. Throughflow regulator according to one of claims 1 to 11, **characterised in that** the annular membrane is extended inwards over a region that forms the closure member and inwardly adjoins the housing part seal (5) and hence in the open position forms a partition wall that divides the housing chamber (12) into two partial annular chambers (19, 20) and in this position abuts with its free inner annular edge (23) on the housing part (4) on the outflow side, **in that** outflow openings (21) and the throughflow openings (14) are attached to the partial annular chamber (19) on the inflow side and **in that** at least one backflow opening (22) empties into the partial annular chamber (20) on the outflow side.

13. Throughflow regulator according to one of claims 1 to 12, **characterised in that** the throttle member (15) between the inflow-side and outflow-side housing parts (3, 4) is secured in a housing chamber (12) and **in that** the outflow-side housing part (4) has a contact surface on the outflow side and an external support and the inflow-side housing part (3) has a housing wall (16) or similar abutment for the annular throttle member (15) on the inside, forming the boundary of the regulating gap.

14. Throughflow regulator according to one of claims 1 to 13, **characterised in that** the throughflow regulator is also constructed as a backflow preventer.

15. Throughflow regulator according to claim 14, **characterised in that** the annular membrane (11) adjacent to the housing part seal (5) is constructed as a closure member and at its inner end is integrally connected to the throttle member (15).

16. Throughflow regulator according to one of claims 1 to 15, **characterised in that** the throughflow regulator is designed to be installed in a liquid-carrying pipe and comprises on the outside an annular seal (8) for sealing relative to the liquid-carrying pipe and **in that** this annular seal (8) is integrally connected to the housing part seal (5) between the facing sides of the housing parts (3, 4).

17. Throughflow regulator according to claim 16, **characterised in that** the outer annular seal (8) is in the form of an O-ring seal or round cord seal.

18. Throughflow regulator according to one of claims 1 to 17, **characterised in that** between the two adjacent housing parts (3, 4) on the outside is provided an annular groove (9) for accommodating the outer annular seal (8) and **in that** the annular groove (9) is formed by a recess on one housing part (3), open towards the separating point of the housing (2), to form one side wall and the base of the groove and by the inner end face of the other housing part (4) to form the second side wall.

19. Throughflow regulator according to one of claims 1 to 18, **characterised in that** the housing part seal (5) is integrally connected on both sides to at least one throttle member (15, 15'), these throttle members (15, 15') each being mounted inside the housing (2) in a regulating gap (17, 17').

20. Throughflow regulator according to claim 19, **characterised in that** the annular housing walls (25, 25') that clamp the housing part seal (5) between their end faces separate the regulating gaps (17, 17') associated with the throttle members (15, 15') from one another.

21. Throughflow regulator according to claim 19 or 20, **characterised in that** the throttle members (15, 15') provided on both sides of the housing part seal (5) respond to different differential pressures and **in that** a first throttle member (15) preferably responds at low pressures whereas a second throttle member (15') responds at high pressures.

22. Throughflow regulator according to one of claims 3 to 21, **characterised in that** the throughflow regulator has at least one lip-shaped throttle member (15, 15').

23. Throughflow regulator according to one of claims 1 to 22, **characterised in that** the throughflow regulator has at least one throttle member (15') in the form of an O-ring.

24. Throughflow regulator according to one of claims 1 to 23, **characterised in that** the at least one lip-shaped throttle member (15, 15') is oriented with its free lip end region (30) preferably diagonally against the direction of flow (Pf1).

25. Throughflow regulator according to one of claims 22 to 24, **characterised in that** the regulating movement of the at least one lip-shaped throttle member (15, 15') is limited by a regulating stop.

26. Throughflow regulator according to one of claims 22 to 25, **characterised in that** the at least one lip-shaped throttle member (15, 15') has a lip portion (29) oriented approximately at right angles to the direction of flow (Pf1) and merging into the free lip end region (30) oriented counter to the direction of flow (Pf1).

27. Throughflow regulator according to claim 26, **characterised in that** the lip portion (29) oriented approximately at right angles to the direction of flow (Pf1) cooperates with the regulating stop.

28. Throughflow regulator according to one of claims 1 to 27, **characterised in that** at least one of the housing parts (3, 4) has at least two preferably substantially concentric annular walls (24, 25, 26; 24', 25', 26') which are joined together by substantially radial connecting strips (27).

29. Throughflow regulator according to claim 28, **characterised in that** at least one connecting web (27) arranged downstream of a throttle member (15, 15') on the outflow side is constructed as a regulating stop and/or as a throttle member abutment.

30. Throughflow regulator according to one of claims 19 to 29, **characterised in that** the throttle members (15, 15') provided on both sides of the housing part seal (5) have different configurations, adapted to their respective response pressures.

31. Throughflow regulator according to claim 30, **characterised in that** the housing part seal (5) is connected on the one hand to a lip-shaped throttle member (15) and on the other hand to a throttle member (15') constructed as an O-ring.

32. Throughflow regulator according to one of claims 19 to 30, **characterised in that** the housing part seal (5) is connected on each side to a lip-shaped throttle member (15, 15').

33. Throughflow regulator according to one of claims 21 to 32, **characterised in that** the throttle member (15) that responds at low pressures is associated with the inner or the outer control gap (17, 17').

34. Throughflow regulator according to one of claims 19 to 33, **characterised in that** the housing part seal (5) and the throttle members (15, 15') connected thereto form a multi-component injection-moulded part and **in that** the throttle members (15, 15') are made from different elastomers.

35. Throughflow regulator according to one of claims 1 to 34, **characterised in that** at least one housing wall (16) that delimits a regulating gap (17, 17') has a rib-shaped, groove-shaped or similar regulating profile (24; 28, 28') extending substantially in the direction of flow (Pf1).

## Revendications

1. Régulateur de débit réalisé sous la forme d'une pièce intégrée pouvant être insérée dans un conduit de gaz ou de liquide, et muni d'un carter (2) dans l'espace interne duquel est disposé au moins un corps d'étranglement ou de régulation (15, 15') délimitant, entre lui-même et une paroi (16) du carter, un interstice de régulation (17, 17') variant en fonction de la pression, sachant que ledit carter est composé d'au moins deux parties (3, 4), et sachant qu'il est prévu, entre les côtés de deux parties de carter voisines qui sont tournés l'un vers l'autre, une garniture d'étanchement (5) reliée, d'un seul tenant, au corps d'étranglement ou de régulation (15, 15') prévu au minimum et logé dans l'espace interne dudit carter.

2. Régulateur de débit selon la revendication 1, **caractérisé par le fait que** la pièce intégrée est également réalisée comme un élément antireflux ; et **par le fait que** la garniture d'étanchement (5) des parties du carter est reliée à cette fin, d'un seul tenant, à au moins un corps d'obturation logé de façon mobile dans l'espace interne du carter, lequel corps d'obturation est réalisé sous la forme d'une membrane annulaire (11) à laquelle le fluide refoulé peut imprimer des mouvements à l'intérieur de la chambre dudit carter, et lequel corps d'obturation assure, en position de fermeture, l'étanchéité d'un orifice de passage ou de plusieurs orifices de passage de canaux d'afflux.

3. Régulateur de débit selon la revendication 1 ou 2, **caractérisé par le fait que** la garniture d'étanchement (5) des parties du carter, et la membrane annulaire (11) prévue au minimum et matérialisant le corps d'obturation, sont réalisées sous la forme de corps aplatis ou plats.

4. Régulateur de débit selon l'une des revendications 1 à 3, **caractérisé par le fait que** les parties (3, 4) du carter possèdent des faces frontales annulaires en vis-à-vis mutuel, entre lesquelles la garniture d'étanchement (5) desdites parties du carter est enserrée.

5. Régulateur de débit selon l'une des revendications 1 à 4, **caractérisé par le fait qu'**une protubérance du carter, de préférence centrale et située sur une première partie (3) dudit carter, pénètre dans un évidement de centrage (31) d'une seconde partie (4) dudit carter.

6. Régulateur de débit selon l'une des revendications 1 à 5, **caractérisé par le fait que** des éléments de crantage, s'interpénétrant en position de montage, sont ménagés sur les au moins deux parties (3, 4) du carter prévues, afin de solidariser lesdites parties (3, 4) du carter.

7. Régulateur de débit selon la revendication 6, **caractérisé par le fait que**, en tant qu'éléments de crantage, l'une (4) des parties du carter présente un orifice central (6) et l'autre partie (3) dudit carter comporte, de préférence, plusieurs éléments d'accrochage ou de crochets (7) pénétrant dans ledit orifice.

8. Régulateur de débit selon la revendication 7, **caractérisé par le fait que** les éléments d'accrochage (7) de l'une (3) des parties du carter traversent l'autre partie (4) dudit carter en position de montage, et font saillie au-delà de la face extérieure de cette dernière.

9. Régulateur de débit selon l'une des revendications 4 à 8, **caractérisé par le fait que** les faces frontales, enserrant la garniture d'étanchement (5) des parties du carter, sont prévues du côté des bords extérieurs desdites parties (3, 4) du carter.

10. Régulateur de débit selon l'une des revendications 4 à 9, **caractérisé par le fait que** la face frontale intérieure de la partie (3) du carter située côté afflux se prolonge, vers l'intérieur, au-delà de la zone d'enserrement de la garniture d'étanchement (5) des parties du carter, et forme une région de la paroi de la chambre dudit carter ; et **par le fait qu'**un canal d'afflux ou plusieurs canaux d'afflux débouche(nt) à cet emplacement.

11. Régulateur de débit selon la revendication 10, **caractérisé par** la présence de canaux d'afflux (13) qui sont agencés avec répartition dans le sens périphérique et débouchent, de préférence, directement à côté de la zone d'enserrement de la région de la membrane annulaire (11) qui matérialise la garniture d'étanchement (5) des parties du carter.

12. Régulateur de débit selon l'une des revendications 1 à 11, **caractérisé par le fait que** la membrane annulaire est prolongée, vers l'intérieur, au-delà d'une région matérialisant le corps d'obturation et située, vers l'intérieur, dans la continuité directe de la garniture d'étanchement (5) des parties du carter, de sorte qu'elle forme, en position d'ouverture, une cloison séparatrice scindant la chambre (12) du carter en deux compartiments annulaires partiels (19, 20), et porte dans cette position, par son bord annulaire intérieur libre (23), contre la partie (4) du carter qui est située côté sortie ; **par le fait que** des orifices de sortie (21), ainsi que les orifices de passage (14), sont raccordés au compartiment annulaire partiel (19) situé côté afflux ; et **par le fait qu'**au moins un orifice de reflux (22) débouche dans le compartiment annulaire partiel (20) situé côté sortie.

13. Régulateur de débit selon l'une des revendications 1 à 12, **caractérisé par le fait que** le corps d'étranglement (15) est consigné à demeure dans une chambre (12) du carter, entre les parties (3, 4) dudit carter qui sont situées côté afflux et côté sortie ; et **par le fait que** la partie (4) du carter, située côté sortie, comporte une zone de contact située côté sortie et un appui extérieur et la partie (3) dudit carter, située côté afflux, offre une paroi intérieure (16) de carter matérialisant la délimitation de l'interstice de régulation, ou bien une zone de contact similaire affectée au corps annulaire d'étranglement (15).

14. Régulateur de débit selon l'une des revendications 1 à 13, **caractérisé par le fait que** ledit régulateur de débit est également réalisé sous la forme d'un élément antireflux.

15. Régulateur de débit selon la revendication 14, **caractérisé par le fait que** la membrane annulaire (11) est réalisée sous la forme d'un corps d'obturation dans la continuité directe de la garniture d'étanchement (5) des parties du carter et est reliée au corps d'étranglement (15), d'un seul tenant, par son extrémité intérieure.

16. Régulateur de débit selon l'une des revendications 1 à 15, **caractérisé par le fait que** ledit régulateur de débit est réalisé pour être inséré dans un conduit de liquide et présente, extérieurement, une garniture annulaire d'étanchement (8) pour assurer l'étanchéité vis-à-vis dudit conduit de liquide ; et **par le fait que** cette garniture annulaire d'étanchement (8) est reliée d'un seul tenant, à la garniture d'étanchement (5) des parties du carter, entre les côtés desdites parties (3, 4) du carter qui se font mutuellement face.

17. Régulateur de débit selon la revendication 16, **caractérisé par le fait que** la garniture annulaire extérieure d'étanchement (8) est réalisée sous la forme d'un joint torique ou d'une garniture à cordon circulaire.

18. Régulateur de débit selon l'une des revendications 1 à 17, **caractérisé par le fait qu'**une rainure annulaire (9) est prévue extérieurement, entre les deux parties de carter (3, 4) voisines, pour recevoir la garniture annulaire extérieure d'étanchement (8) ; et **par le fait que** ladite rainure annulaire (9) est matérialisée par une zone en retrait située sur l'une (3) des parties du carter et ouverte en direction de la zone de séparation dudit carter (2), en vue de former une paroi latérale et le fond de ladite rainure, et par la face frontale intérieure de l'autre partie (4) dudit carter, en vue de former la seconde paroi latérale.

19. Régulateur de débit selon l'une des revendications 1 à 18, **caractérisé par le fait que** la garniture d'étanchement (5) des parties du carter est au moins reliée d'un seul tenant à un corps respectif d'étranglement (15, 15'), de part et d'autre, ces corps d'étranglement (15, 15') étant respectivement logés dans un interstice de régulation (17, 17') à l'intérieur dudit carter (2).

20. Régulateur de débit selon la revendication 19, **caractérisé par le fait que** les parois annulaires (25, 25') du carter, enserrant frontalement entre elles la garniture d'étanchement (5) des parties dudit carter, séparent mutuellement les interstices de régulation (17, 17') associés aux corps d'étranglement (15, 15').

21. Régulateur de débit selon la revendication 19 ou 20, **caractérisé par le fait que** les corps d'étranglement (15, 15'), prévus de part et d'autre sur la garniture d'étanchement (5) des parties du carter, réagissent à différentes pressions différentielles ; et **par le fait qu'**un premier corps d'étranglement (15) réagit, de préférence, dans la plage de basses pressions et un second corps d'étranglement (15') réagit, en revanche, dans la plage de hautes pressions.

22. Régulateur de débit selon l'une des revendications 3 à 21, **caractérisé par le fait que** ledit régulateur de débit présente au moins un corps d'étranglement (15, 15') réalisé en forme de lèvre.

23. Régulateur de débit selon l'une des revendications 1 à 22, **caractérisé par le fait que** ledit régulateur de débit comporte au moins un corps d'étranglement (15') réalisé sous la forme d'un joint torique.

24. Régulateur de débit selon l'une des revendications 1 à 23, **caractérisé par le fait que** le au moins un corps d'étranglement (15, 15') en forme de lèvre est de préférence orienté, par la région extrême libre (30) de sa lèvre, de préférence de biais, en sens inverse de la direction d'écoulement (Pf1).

25. Régulateur de débit selon l'une des revendications 22 à 24, **caractérisé par le fait que** le mouvement de régulation du au moins un corps d'étranglement (15, 15') en forme de lèvre est limité par une butée régulatrice.

26. Régulateur de débit selon l'une des revendications 22 à 25, **caractérisé par le fait que** le au moins un corps d'étranglement (15, 15') en forme de lèvre comporte un tronçon de lèvre (29) qui est sensiblement orienté dans le sens transversal, vis-à-vis de la direction de l'écoulement (Pfl), et fusionne avec la région extrême libre (30) de la lèvre, orientée en sens inverse de la direction de l'écoulement (Pf1).

27. Régulateur de débit selon la revendication 26, **caractérisé par le fait que** le tronçon de lèvre (29), sensiblement orienté dans le sens transversal vis-à-vis de la direction de l'écoulement (Pfl), coopère avec la butée régulatrice.

28. Régulateur de débit selon l'une des revendications 1 à 27, **caractérisé par le fait qu'**au moins l'une des parties (3, 4) du carter comporte au moins deux parois annulaires (24, 25, 26 ; 24', 25', 26'), de préférence sensiblement concentriques, reliées l'une à l'autre par l'intermédiaire de membrures de solidarisation (27) sensiblement radiales.

29. Régulateur de débit selon la revendication 28, **caractérisé par le fait qu'**au moins une membrure de solidarisation (27), disposée en aval d'un corps d'étranglement (15, 15') du côté sortie, est réalisée sous la forme d'une butée régulatrice et/ou d'une zone de contact dédiée audit corps d'étranglement.

30. Régulateur de débit selon l'une des revendications 19 à 29, **caractérisé par le fait que** les corps d'étranglement (15, 15'), prévus de part et d'autre de la garniture d'étanchement (5) des parties du carter, possèdent des configurations différentes respectivement adaptées à leur pression de réaction.

31. Régulateur de débit selon la revendication 30, **caractérisé par le fait que** la garniture d'étanchement (5) des parties du carter est reliée, d'une part, à un corps d'étranglement (15) en forme de lèvre et, d'autre part, à un corps d'étranglement (15') réalisé sous la forme d'un joint torique.

32. Régulateur de débit selon l'une des revendications 19 à 30, **caractérisé par le fait que** la garniture d'étanchement (5) des parties du carter est respectivement reliée, de part et d'autre, à un corps d'étranglement (15, 15') en forme de lèvre.

33. Régulateur de débit selon l'une des revendications 21 à 32, **caractérisé par le fait que** le corps d'étranglement (15), réagissant dans la plage de basses pressions, est assigné à l'interstice de commande (17, 17') intérieur ou extérieur.

34. Régulateur de débit selon l'une des revendications 19 à 33, **caractérisé par le fait que** la garniture d'étanchement (5) des parties du carter, ainsi que les corps d'étranglement (15, 15') reliés à cette dernière, forment une pièce venue de coulée par injection à plusieurs composants ; et **par le fait que** lesdits corps d'étranglement (15, 15') consistent en des élastomères différents.

35. Régulateur de débit selon l'une des revendications 1 à 34, **caractérisé par le fait qu'**au moins une paroi (16) du carter, délimitant un interstice de régulation (17, 17'), présente un profilage nervuré, strié ou un profilage régulateur similaire (24 ; 28, 28') s'étendant, sensiblement, dans la direction de l'écoulement (Pf1).
